# EUROPEAN PATENT APPLICATION

(11) **EP 4 401 503 A1**
(43) Date of publication of application: **17.07.2024**
(21) Application number: 22867224.2
(22) Date of filing: 26.08.2022
(51) Int. Cl.: H04W 76/15, H04W 76/18, H04W 84/12

(54) **COMMUNICATION DEVICE, COMMUNICATION METHOD, AND PROGRAM**

(30) Priority: 09.09.2021 JP 2021147003
(71) Applicant: CANON KABUSHIKI KAISHA, Tokyo 146-8501 (JP)
(72) Inventor: INOHIZA Hirohiko, Tokyo 146-8501 (JP)
(74) Representative: Canon Europe Limited
(86) International application number: PCT/JP2022/032162
(87) International publication number: WO 2023/037902

(57) **Abstract**

A communication apparatus performs wireless communication compliant with Institute of Electrical and Electronics Engineers (IEEE) 802.11 series standards via a plurality of wireless communication links using a different frequency from each other. The communication apparatus includes a reception unit configured to receive an Association Request frame including information indicating a plurality of links for which wireless communication link establishment is requested by another communication apparatus, and sets, in a case where the wireless communication link establishment is accepted for some of the plurality of links indicated by the information while the wireless communication link establishment is rejected for some of the plurality of links indicated by the information, information of a Status code that is included in an Association Response frame and is a common Status code for the plurality of links to information indicating success, and transmits the frame to the other communication apparatus.

## Description

### Technical Field

The present invention relates to a communication apparatus configured to perform wireless communication.

### Background Art

Data volume in communication is increasing in recent years, and communication technologies such as wireless local area networks (wireless LANs) have been developed. The Institute of Electrical and Electronics Engineers (IEEE) 802.11 standard series are known as major communication standards for wireless LANs. The IEEE 802.11 standard series include IEEE 802.11a/b/g/n/ac/ax standards. For example, IEEE 802.11ax, which is the most recent standard, offers standardized technologies for improving communication speed in congested conditions in addition to a high peak throughput of a maximum of 9.6 gigabits per second (Gbps) by using orthogonal frequency-division multiple access (OFDMA) (refer to PTL1). "OFDMA" is the abbreviation for orthogonal frequency division multiple access.

As a next-generation standard for further improvements in throughput, spectral efficiency, and communication latency, a task group referred to as IEEE 802.11be has been set up.

In the IEEE 802.11be, Multi-Link communication in which a single access point (AP) establishes a plurality of Links with a single Station (STA) using the 2.4, 5, and 6 GHz frequency bands and performs simultaneous communication is discussed.

### Citation List

### Patent Literature

PTL1: Japanese Patent Application No. 2018-50133

### Summary of Invention

### Technical Problem

The Institute of Electrical and Electronics Engineers (IEEE) 802.11 standards, however, do not define a detailed procedure for Multi-Link communication setup. Especially, content of an Association Response to be transmitted by a communication apparatus in a case where establishment of some of a plurality of links requested using an Association Request cannot be accepted is not specified. Further, a detailed sequence through which a communication apparatus having received an Association Response establishes multi-link communication with a counterpart apparatus thereafter is not specified.

The present invention is directed to providing a mechanism for performing multi-link communication setup using Association Requests/Association Responses.

### Solution to Problem

In order to achieve the above-described purpose, a communication apparatus according to the present invention is a communication apparatus configured to perform wireless communication compliant with Institute of Electrical and Electronics Engineers (IEEE) 802.11 series standards via a plurality of wireless communication links using a different frequency from each other. The communication apparatus includes a reception unit configured to receive an Association Request frame including information indicating a plurality of links for which wireless communication link establishment is requested by another communication apparatus, and a transmission unit configured to set, in a case where the wireless communication link establishment is accepted for some of the plurality of links indicated by the information while the wireless communication link establishment is rejected for some of the plurality of links indicated by the information, information of a Status code that is included in an Association Response frame and is a common Status code for the plurality of links to information indicating success, and transmit the Association Response frame to the other communication apparatus.

Further, in order to achieve the above-described purpose, a communication apparatus according to the present invention is a communication apparatus configured to perform wireless communication compliant with IEEE 802.11 series standards via a plurality of wireless communication links using a different frequency from each other. The communication apparatus includes a reception unit configured to receive an Association Request frame including information indicating a plurality of links for which wireless communication link establishment is requested by another communication apparatus, and a transmission unit configured to set, in a case where the wireless communication link establishment is accepted for some of the plurality of links indicated by the information while the wireless communication link establishment is rejected for some of the plurality of links indicated by the information, information of a Status code that is included in an Association Response frame and is a common Status code for the plurality of links to information indicating fail, and transmit the Association Response frame to the other communication apparatus.

Further, in order to achieve the above-described purpose, a communication apparatus according to the present invention is a communication apparatus configured to perform wireless communication compliant with IEEE 802.11 series standards via a plurality of wireless communication links using a different frequency from each other. The communication apparatus includes a first transmission unit configured to transmit an Association Request frame including information indicating a plurality of links for which wireless communication link establishment is requested, a reception unit configured to receive, as a response to the Association Request frame, an Association Response frame in which information of a Status code that is included in the Association Response frame and is a common Status code for the plurality of links is set to information indicating fail, a generation unit configured to generate, based on the reception of the Association Request frame by the reception unit, an Association Request frame that designates, as a link for which the wireless communication link establishment is requested, a link for which the wireless communication link establishment is accepted in the Association Request frame, and a second transmission unit configured to transmit the Association Request frame generated by the generation unit.

### Advantageous Effects of Invention

The present invention makes it possible to perform multi-link communication setup by using Association Requests/Association Responses.

### Brief Description of Drawings

[Fig. 1] Fig. 1 is a diagram illustrating a network configuration according to the present exemplary embodiment.
[Fig. 2] Fig. 2 is a diagram illustrating a hardware configuration of a communication apparatus according to the present exemplary embodiment.
[Fig. 3] Fig. 3 is a diagram illustrating functional configurations of communication apparatuses according to the present exemplary embodiment.
[Fig. 4] Fig. 4 is a sequence diagram illustrating a first example of a Multi-link communication setup process according to the present exemplary embodiment.
[Fig. 5] Fig. 5 is a sequence diagram illustrating a second example of a Multi-link communication setup process according to the present exemplary embodiment.
[Fig. 6] Fig. 6 is a sequence diagram illustrating a third example of a Multi-link communication setup process according to the present exemplary embodiment.
[Fig. 7] Fig. 7 is a sequence diagram illustrating a fourth example of a Multi-link communication setup process according to the present exemplary embodiment.
[Fig. 8] Fig. 8 is a sequence diagram illustrating a fifth example of a Multi-link communication setup process according to the present exemplary embodiment.
[Fig. 9] Fig. 9 is a flowchart illustrating a process that an access point (AP) multi-link device (MLD) according to the present exemplary embodiment performs.
[Fig. 10] Fig. 10 is a flowchart illustrating a process that a non-AP MLD according to the present exemplary embodiment performs.
[Fig. 11] Fig. 11 is a flowchart illustrating a process that the AP MLD according to the present exemplary embodiment performs.
[Fig. 12] Fig. 12 is a flowchart illustrating a process that the non-AP MLD according to the present exemplary embodiment performs.

### Description of Embodiments

Various exemplary embodiments of the present invention will now be described in detail below with reference to the attached drawings. It is to be noted that configurations according to the exemplary embodiments described below are merely examples and that the present invention is not limited to the illustrated configurations.

### (Configuration of Wireless Communication System)

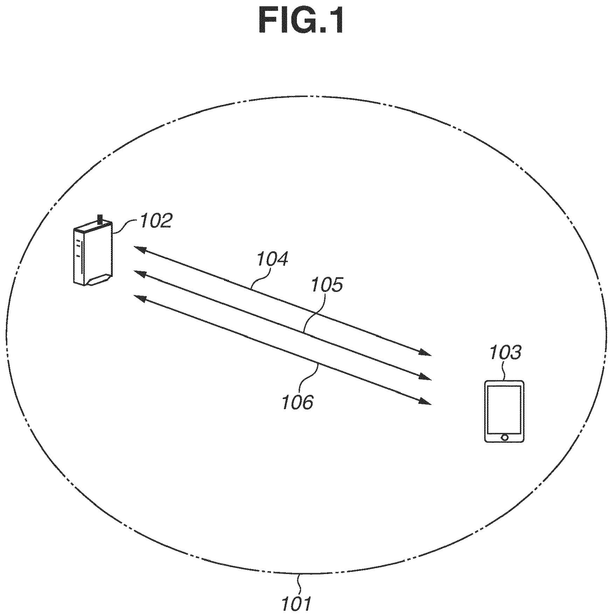

Fig. 1 illustrates a configuration of a network for which a communication apparatus 101 (hereinafter, "Non-access point (Non-AP) multi-link device (MLD) 101") according to the present exemplary embodiment searches. A communication apparatus 102 (hereinafter, "access point (AP) MLD 102") is an AP having a role of configuring a wireless network 100. The AP MLD 102 can communicate with the non-AP MLD 101. The present exemplary embodiment is applied to the Non-AP MLD 101 and the AP MLD 102.

The Non-AP MLD 101 and the AP MLD 102 each can perform wireless communication compliant with the Institute of Electrical and Electronics Engineers (IEEE) 802.11be (Extreme High Throughput (EHT)) standard. "IEEE" is the abbreviation for Institute of Electrical and Electronics Engineers. The Non-AP MLD 101 and the AP MLD 102 can communicate in the 2.4, 5, and 6 gigahertz (GHz) frequency bands. The frequency band used for each communication apparatus is not limited to the foregoing frequency bands and can be another frequency band such as the 60 GHz band. The Non-AP MLD 101 and the AP MLD 102 can communicate using the 20, 40, 80, 160, and 320 megahertz (MHz) bandwidths. The bandwidth used for each communication apparatus is not limited to the foregoing bandwidths and can be another bandwidth such as 240 or 4 MHz.

The Non-AP MLD 101 and the AP MLD 102 are capable of realizing Multi User (MU) communication to multiplex signals of a plurality of users by performing orthogonal frequency division multiple access (OFDMA) communication based on the IEEE 802.11be standard. "OFDMA" is the abbreviation for Orthogonal Frequency Division Multiple Access. In OFDMA communication, portions (Resource Units (RUs)) of a divided frequency band are allocated to stations (STAs) without overlapping with each other, and carrier waves of the STAs go straight. Thus, an AP can perform parallel communication with a plurality of STAs within a predefined bandwidth.

While the Non-AP MLD 101 and the AP MLD 102 support the IEEE 802.11be standard, the Non-AP MLD 101 and the AP MLD 102 may also support legacy standards prior to the IEEE 802.11be standard. Specifically, the Non-AP MLD 101 and the AP MLD 102 may support at least one of the IEEE 802.11a/b/g/n/ac/ax standards. Further, other communication standards such as Bluetooth^{®}, Near Field Communication (NFC), ultra-wideband (UWB), ZigBee, and multiband orthogonal frequency division multiplexing (Multiband-OFDM) alliance (MBOA) may also be supported in addition to the IEEE 802.11 series standards. "UWB" is the abbreviation for Ultra Wide Band, and MBOA is the abbreviation for Multi Band OFDM Alliance. Further, "NFC" is the abbreviation for Near Field Communication. Example of UWB include Wireless Universal Serial Bus (Wireless USB), Wireless 1394, and WiMedia Network (WiNET). Further, communication standards for wired communication such as wired local area networks (wired LANs) may also be supported. Specific examples of the AP MLD 102 include, but are not limited to, a wireless local area network (wireless LAN) router and a personal computer (PC). The AP MLD 102 may also be an information processing apparatus such as a wireless chip capable of performing wireless communication based on the IEEE 802.11be standard. Further, specific examples of the Non-AP MLD 101 include, but are not limited to, a camera, a tablet, a smartphone, a PC, a mobile phone, a video camera, and a headset. The Non-AP MLD 101 may also be an information processing apparatus such as a wireless chip capable of performing wireless communication compliant with the IEEE 802.11be standard.

Each communication apparatus can perform communication using the 20, 40, 80, 160, and 320 MHz bandwidths.

Further, the Non-AP MLD 101 and the AP MLD 102 establish links via a plurality of frequency channels to perform Multi-Link communication. The IEEE 802.11 series standards define a bandwidth of each frequency channel as 20 MHz. The frequency channel herein is the frequency channel defined by the IEEE 802.11 series standards, and the IEEE 802.11 series standards define a plurality of frequency channels for each of the 2.4, 5, 6, and 60 GHz frequency bands.

A bandwidth of 40 MHz or wider may be used in a single frequency channel by bonding to an adjacent frequency channel. For example, the AP MLD 102 is capable of establishing a link with the Non-AP MLD 101 via a first frequency channel of the 2.4 GHz band and communicating with the Non-AP MLD 101. The Non-AP MLD 101 is capable of establishing, in parallel with the link, another link with the AP MLD 102 via a second frequency channel of the 5 GHz band and communicating with the AP MLD 102. In this case, the Non-AP MLD 101 performs Multi-Link communication to maintain the second link via the second frequency channel in parallel with the link via the first frequency channel. As described above, the AP MLD 102 establishes links with the Non-AP MLD 101 via a plurality of frequency channels, making it possible to improve throughput in the communication with the Non-AP MLD 101.

A plurality of links in different frequency bands may be established between communication devices in Multi-link communication. For example, the Non-AP MLD 101 may be configured to establish a link in each of the 2.4, 5, and 6 GHz bands. Alternatively, links may be established via a plurality of different channels included in the same frequency band. For example, a 6-ch link in the 2.4 GHz band may be established as a first link, and a 1-ch link in the 2.4 GHz band may be established as a second link in addition to the first link. There may be links in the same frequency band and links in different frequency bands. For example, the Non-AP MLD 101 may be configured to establish a 1-ch link in the 2.4 GHz band and a 149-ch link in the 5 GHz band in addition to the 6-ch link in the 2.4 GHz as the first link. The Non-AP MLD 101 and an AP establish a plurality of connections of different frequencies so that, even in a case where a band is congested, the Non-AP MLD 101 and the AP can still establish a connection in another band. This makes it possible to prevent a decrease in throughput and a communication delay in the communication with the Non-AP MLD 101.

While there are one AP MLD and one Non-AP MLD in the wireless network in Fig. 1, the number and arrangement of AP MLDs and Non-AP MLDs are not limited to those in Fig. 1. For example, another Non-AP MLD may also be added to the wireless network in Fig. 1. Links that are established in this case are not limited in terms of frequency band, number of links, and frequency width. While three links 104, 105, and 106 are established in the example illustrated in Fig. 1, the number of links that are established in Multi-link communication is not limited to the number described above.

In performing Multi-link communication, the AP MLD 102 and the Non-AP MLD 101 perform data transmission/reception with each other via a plurality of links. Further, the AP MLD 102 and the Non-AP MLD 101 may be capable of performing Multiple-Input And Multiple-Output (MIMO) communication. In this case, the AP MLD 102 and the Non-AP MLD 101 include a plurality of antennas, and one of the AP MLD 102 and the Non-AP MLD 101 transmits different signals from its antennas using the same frequency channel. On the reception side, all of reached signals are simultaneously received from a plurality of streams using the plurality of antennas, and the signals of each stream are separated and decoded. By performing MIMO communication as described above, the AP MLD 102 and the Non-AP MLD 101 can communicate more data in the same amount of time compared to a case where MIMO communication is not performed. Further, the AP MLD 102 and the Non-AP MLD 101 may perform MIMO communication via some of the links in a case of performing Multi-link communication.

### (Configurations of AP MLD and Non-AP MLD)

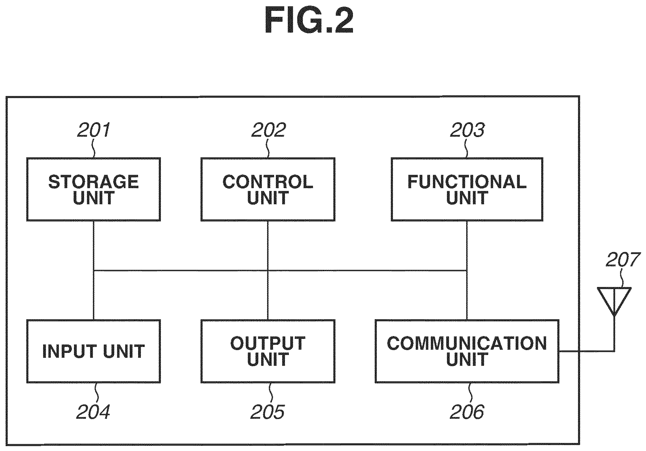

Fig. 2 illustrates an example of a hardware configuration of the Non-AP MLD 101 according to the present exemplary embodiment. The Non-AP MLD 101 includes a storage unit 201, a control unit 202, a functional unit 203, an input unit 204, an output unit 205, a communication unit 206, and an antenna 207. There can be a plurality of antennas.

The storage unit 201 is composed of one or more memories such as a read-only memory (ROM) and a random access memory (RAM) and stores computer programs for performing various operations described below and various information such as communication parameters for wireless communication. "ROM" is the abbreviation for Read Only Memory, and "RAM" is the abbreviation for Random Access Memory. As the storage unit 201, a storage medium other than a memory such as a ROM or a RAM may be used, such as a flexible disk, a hard disk, an optical disk, a magneto-optical disk, a compact disk (CD) ROM (CD-ROM), CD-recordable (CD-R), a magnetic tape, a Non-volatile memory card, or a digital versatile disk (DVD). Further, the storage unit 201 may include a plurality of memories.

For example, the control unit 202 is composed of one or more processors, such as a central processing unit (CPU) and a micro-processing unit (MPU), and controls the entire Non-AP MLD 101 by executing computer programs stored in the storage unit 201. The control unit 202 may be configured to control the entire Non-AP MLD 101 in collaboration with computer programs and an operating system (OS) that are stored in the storage unit 201. Further, the control unit 202 generates data and signals (wireless frames) to transmit in communication with other communication apparatuses.

"CPU" is the abbreviation for Central Processing Unit, and "MPU" is the abbreviation for Micro Processing Unit. Further, the control unit 202 may include a plurality of processors such as multi-core processors, and the plurality of processors may control the entire Non-AP MLD 101.

Further, the control unit 202 controls the functional unit 203 to perform wireless communication and predetermined processing such as imaging, printing, and projecting. The functional unit 203 is hardware for the Non-AP MLD 101 to perform the predetermined processing.

The input unit 204 receives various operations from users. The output unit 205 performs various outputs to users via a monitor screen and/or a speaker. The outputs by the output unit 205 may be a display on the monitor screen, an audio output from the speaker, or a vibration output. The input unit 204 and the output unit 205 may be implemented as a single module similarly to a touch panel. Further, the input unit 204 and the output unit 205 each may be integrated with or separated from the Non-AP MLD 101.

The communication unit 206 controls wireless communication compliant with the IEEE 802.11be standard. Further, the communication unit 206 may control wireless communication compliant not only with the IEEE 802.11be standard but also with other IEEE 802.11 series standards and may control wired communication such as a wired LAN. While the IEEE 802.11be standard is applied to describe the present exemplary embodiment, the present exemplary embodiment is also applicable to any IEEE 802.11 series standard to be developed thereafter if Multi-link communication is enabled. The communication unit 206 controls the antenna 207 to transmit or receive signals for wireless communication that are generated by the control unit 202.

In a case where the Non-AP MLD 101 supports NFC standard and Bluetooth^{®} standard in addition to the IEEE 802.11be standard, wireless communication compliant with these communication standards may also be controlled. Further, in a case where the Non-AP MLD 101 is capable of performing wireless communication compliant with a plurality of communication standards, a communication unit and an antenna may be included for each of the communication standards. The Non-AP MLD 101 communicates data, such as image data, document data, and video data, with the Non-AP MLD 101 via the communication unit 206.

The antenna 207 may be configured as a separate component from the communication unit 206 or may be combined with the communication unit 206 into a single module.

The antenna 207 is an antenna capable of performing communication in the 2.4, 5, and 6 GHz bands. While the Non-AP MLD 101 includes a single antenna according to the present exemplary embodiment, the Non-AP MLD 101 may include three antennas. Alternatively, different antennas for different frequency bands may also be included. Further, in a case where the Non-AP MLD 101 includes a plurality of antennas, the Non-AP MLD 101 may include communication units 206 corresponding to each antenna.

The AP MLD 102 has a hardware configuration similar to that of the Non-AP MLD 101.

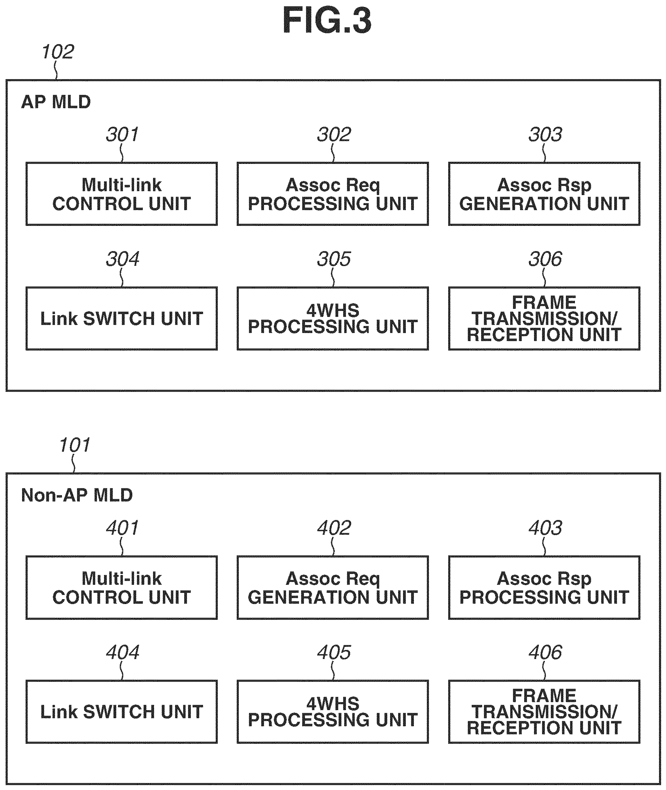

Fig. 3 illustrates functional block diagrams of the AP MLD 102 and the Non-AP MLD 101.

Functions 301 to 306 indicate functions of the AP MLD 102 and are implemented by using software or hardware. A Multi-link control unit 301 controls Multi-links established with the Non-AP MLD 101 and performs Multi-link communication. An Assoc Req processing unit 302 receives an Association Request frame received from the Non-AP MLD 101, analyzes content of the Association Request frame, and processes the content. An Assoc Rsp generation unit 303 generates an Association Response frame as a response message to the Association Request frame and transmits the Association Response frame to the Non-AP MLD 101. A Link switch unit 304 performs processing to switch, as needed, a link established with the Non-AP MLD 101. A 4WHS processing unit 305 performs 4-way handshake processing defined in the IEEE 802.11 standard to share an encryption key with the Non-AP MLD 101. A frame transmission/reception unit 306 transmits and receives wireless frames to and from a wireless communication counterpart apparatus (e.g., the Non-AP MLD 101).

Functions 401 to 406 indicate functions of the Non-AP MLD 101 and are implemented using software or hardware. A Multi-link control unit 401 controls Multi-links established with the AP MLD 102 and performs Multi-link communication. An Assoc Req generation unit 402 generates an Association Request frame to transmit to the AP MLD 102. An Assoc Rsp processing unit 403 receives an Association Response frame transmitted from the AP MLD 102, analyses content of the Association Response frame, and processes the content. A Link switch unit 404 performs processing to switch, as needed, a link established with the AP MLD 101. A 4WHS processing unit 405 performs 4-way handshake processing defined in the IEEE 802.11 standards to share an encryption key with the AP MLD 101. A frame transmission/reception unit 406 transmits and receives wireless frames to and from a wireless communication counterpart apparatus (e.g., the AP MLD 102).

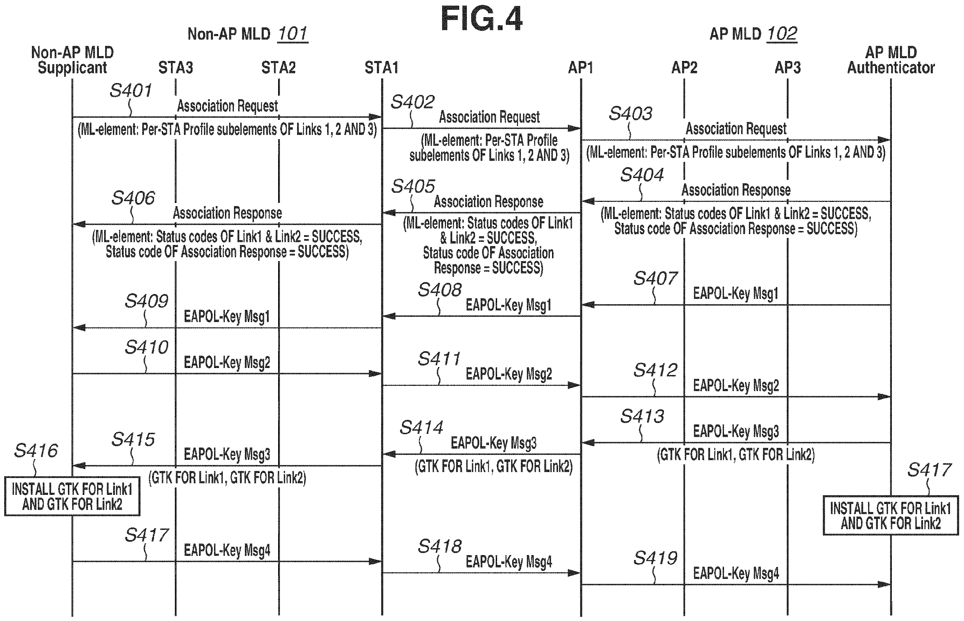

Next, sequences of Multi-link communication setup processes according to the present exemplary embodiment will be described with reference to Figs. 4 to 8. Figs. 4 to 8 illustrate different setup processes, and all or some of the setup processes may be combined and performed as needed. Alternatively, the processes may be performed selectively based on a user operation or a communication apparatus state.

First, a premise process of the entire Multi-link communication setup processes according to the present exemplary embodiment will now be described.

The Non-AP MLD 101 designates a link for which a setup is requested in an Association Request.

The Non-AP MLD 101 stores, in the Association Request, one or more Per-STA Profile subelements each corresponding to a link for which a setup is requested. A specific storage location thereof is a Link Info field of a Basic variant Multi-link element of an Association Request frame. At this time, each requested link is designated using a Link ID.

On the other hand, the AP MLD 102 designates, in an Association Response, each Link for which the setup is accepted. In a case where the AP MLD 102 does not accept a Link that is requested by the non-AP MLD 101 and is not used in transmitting the Association Request, the AP MLD 102 performs the following processing. Specifically, a Per-STA Profile subelement corresponding to the Link is stored in the Association Response. A specific storage location thereof is a Link Info field of a Basic variant Multi-link element of an Association Request frame. Further, reasons for the failure are included in a Status Code subfield of the Per-STA Profile subelement of the Basic variant Multi-link element.

The AP MLD 102 stores, in the Association Response, one or more Per-STA Profile subelements including complete information about an AP of a link that is accepted by the AP MLD 102 and is requested by the non-AP MLD 101. A specific storage location thereof is the Link Info field of the Basic variant Multi-link element of the Association Response frame. At this time, the accepted link is notified using a Link ID.

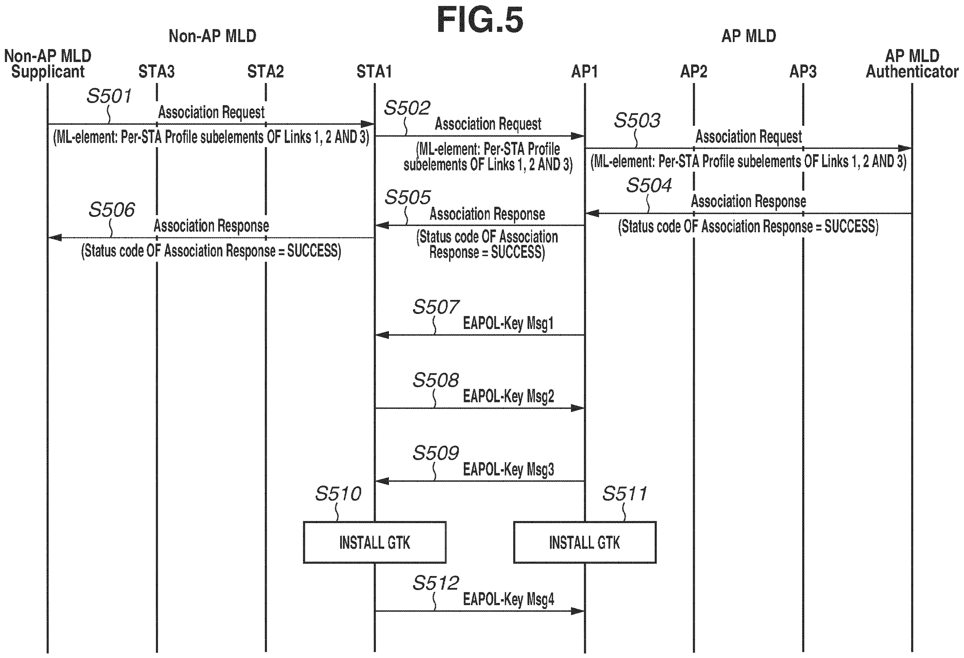

Fig. 4 illustrates a first example of a Multi-link communication setup process according to the present exemplary embodiment. In Fig. 4, the non-AP MLD 101 and the AP MLD 102 are each capable of establishing three wireless links and establish wireless links using all or some of the wireless links based on apparatus states at each moment. The non-AP MLD 101 includes stations 1 to 3 (STA 1, STA 2, STA 3), and the AP MLD 102 includes access points 1 to 3 (AP 1, AP 2, AP 3). A wireless link is established via connection between the stations 1 to 3 (STA 1, STA 2, STA 3) of the non-AP MLD 101 and the access points 1 to 3 (AP 1, AP 2, AP 3) of the AP MLD 102. Hereinafter, a Link 1 is established via connection between the STA 1 and the AP 1, a Link 2 is established via connection between the STA 2 and the AP 2, and a Link 3 is established via connection between the STA 3 and the AP 3. The same applies to Figs. 5 to 8 described below. While the non-AP MLD 101 and the AP MLD 102 are each configured to establish three wireless links, i.e., the non-AP MLD 101 includes the STAs 1 to 3 and the AP MLD 102 includes the APs 1 to 3, according to the present exemplary embodiment, the number of wireless links that can be established is not limited to that described above.

First, a Non-AP MLD Supplicant of the non-AP MLD 101 stores Per-STA Profile subelements of the Links 1, 2, and 3 in an Association Request frame. A specific storage location thereof is a Link Info field of a Basic variant Multi-link element of the Association Request frame. Furthermore, an Association Request frame storing the above-described information in the Link Info field is generated (S401), and the Association Request frame generated in S401 is transmitted to the AP 1 (S402). The AP 1 receives the Association Request frame transmitted in S402 and passes the received Association Request frame to an AP MLD Authenticator of the AP MLD 102 (S403). The AP MLD Authenticator sets Status codes of the Links 1 and 2 to success in the Per-STA Profile subelements of the Basic variant Multi-link element. Furthermore, an Association Response frame with a Status code of an Association Response set to success is generated (S404). The Status code of the Association Response herein is a common Status code of a plurality of links. The AP 1 transmits the Association Response frame generated in S404 to the STA 1 (S405). The STA 1 receives the Association Response frame transmitted in S405 and passes the received Association Response frame to the Non-AP MLD Supplicant of the non-AP MLD 101 (S406).

Thereafter, the non-AP MLD 101 and the AP MLD 102 perform processing of S407 to S419 and perform a 4-way handshake. In the 4-way handshake processing, a group temporal key (GTK) for each of the Links 1 and 2 for which the link establishment is accepted by the AP MLD 102 is generated. No GTK is generated for the Link 3 for which the link establishment is not accepted by the AP MLD 102. The AP MLD Authenticator installs the GTKs generated through the 4-way handshake (S417). The Non-AP MLD Supplicant installs the GTKs generated through the 4-way handshake (S416). As described above, in the first example, the AP MLD sets the STATUS CODE of the Association Response to SUCCESS in a case where the AP MLD accepts some of the links for which a setup is requested. Then, the AP MLD delivers only the GTKs for the accepted links through the 4-way handshake.

Fig. 5 illustrates a second example of a Multi-link communication setup process according to the present exemplary embodiment. In the second example, the AP MLD sets a STATUS CODE of an Association Response to SUCCESS in a case where the AP MLD accepts some of the links for which a setup is requested. Then, in a case where the AP MLD accepts a single Link (Link via which Association transmission/reception is performed), the AP MLD transmits an Association Response without a Basic variant Multi-link element. The Non-AP MLD having received the Association Response without a Basic variant Multi-link element performs a normal 4-way handshake. Differences from the first example will be described in detail below.

S501 to S503 correspond to S401 to S403 in Fig. 4. The AP MLD Authenticator generates an Association Response frame without a Basic variant Multi-link element and with a Status code set to success (S504). The AP 1 transmits the Association Response frame generated in S504 to the STA 1 (S505). The STA 1 receives the Association Response frame transmitted in S505 and passes the Association Response frame to the Non-AP MLD Supplicant of the non-AP MLD 101 (S506).

Thereafter, the non-AP MLD 101 and the AP MLD 102 perform processing of S507 to S512 and perform a 4-way handshake. The 4-way handshake herein is performed via the Link 1 used to transmit the Association Response frame. The AP MLD Authenticator installs the GTK generated through the 4-way handshake (S511). The Non-AP MLD Supplicant installs the GTK generated through the 4-way handshake (S510). The GTKs installed in S510 and S511 are the GTKs for use in communication via the Link 1.

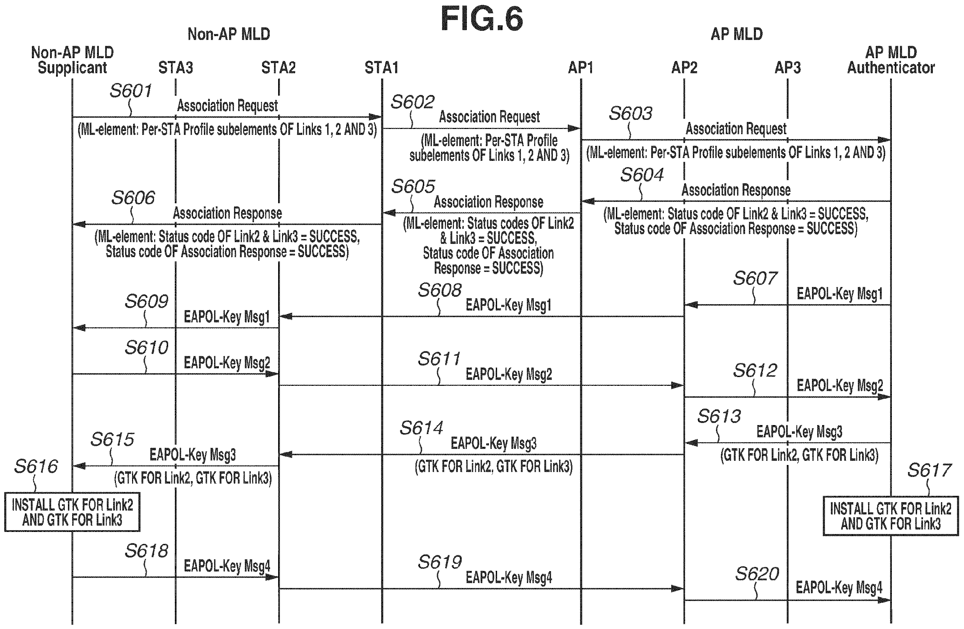

Fig. 6 illustrates a third example of a Multi-link communication setup process according to the present exemplary embodiment. In the third example, the AP MLD sets a STATUS CODE of an Association Response to SUCCESS in a case where the AP MLD accepts some of the links for which a setup is requested. In a case where a link used to return the Association Response is not an accepted link, the link is switched to an accepted link, and a 4-way handshake is performed via the accepted link. Differences from the first example will be described in detail below.

S601 to S603 are similar to S401 to S403 in Fig. 4. The AP MLD Authenticator sets the Status codes of the Links 2 and 3 to success in the Per-STA Profile subelements of the Basic variant Multi-link element. The status codes that are success indicate that the requests for the Links 2 and 3 are successful. Furthermore, an Association Response frame with the Status code of the Association Response set to success is generated (S604). The AP 1 transmits the Association Response frame generated in S604 to the STA 1 (S605). The STA 1 receives the Association Response frame transmitted in S605 and passes the Association Response frame to the Non-AP MLD Supplicant of the non-AP MLD 101 (S606).

Thereafter, the non-AP MLD 101 and the AP MLD 102 perform processing of S607 to S620 and perform a 4-way handshake. The 4-way handshake herein is performed not by using the Link 1 used to transmit the Association Response frame but by using the Link 2 or 3 for which the link establishment is accepted. In the example in Fig. 6, the 4-way handshake is performed using the Link 2. In the 4-way handshake processing, a GTK is generated for each of the Links 2 and 3 for which the link establishment is accepted by the AP MLD 102. No GTK is generated for the Link 1 for which the link establishment is not accepted by the AP MLD 102. The AP MLD Authenticator installs the GTKs generated through the 4-way handshake (S617). The Non-AP MLD Supplicant installs the GTKs generated through the 4-way handshake (S616).

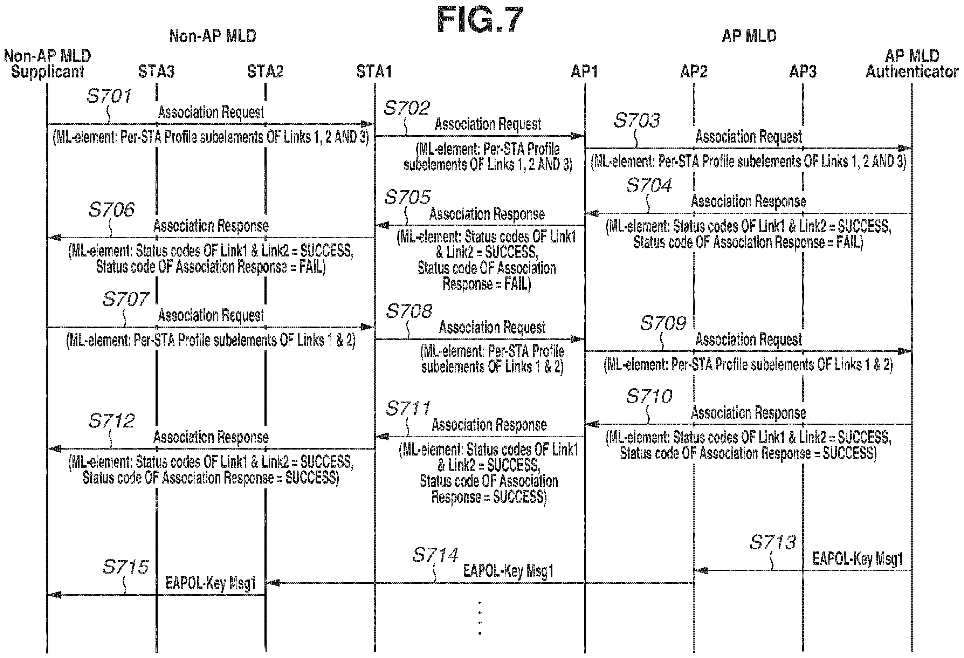

Fig. 7 illustrates a fourth example of a Multi-link communication setup process according to the present exemplary embodiment. In the fourth example, the AP MLD sets a STATUS CODE of an Association Response to FAIL in a case where the AP MLD rejects some of the links for which a setup is requested. There may be a plurality of methods for indicating FAIL. For example, a plurality of STATUS_CODES other than SUCCESS, such as REFUSED_BAD_SUPPORTED_CHANNELS and STATUS_INVALID_PMK, may be defined to enable indication of a detailed reason for FAIL. The REFUSED BAD_SUPPORTED_CHANNELS is a STATUS CODE that indicates that the channel is unsupported. The STATUS_NVALID_PMK is a STATUS CODE that indicates that PMKID is invalid. Then, in a case where the Non-AP MLD receives an Association Response with a STATUS CODE set to FAIL and some of the links that are accepted are included, an Association Request including only the accepted links is retransmitted. Differences from the first example will be described in detail below.

S701 to S703 are similar to S401 to S403 in Fig. 4.

The AP MLD Authenticator sets the Status codes of the Links 1 and 2 to success in the Per-STA Profile subelements of the Basic variant Multi-link element. Furthermore, an Association Response frame with the Status code of the Association Response set to fail is generated in S704. The AP 1 transmits the Association Response frame generated in S704 to the STA 1 (S705). The STA 1 receives the Association Response frame transmitted in S705 and passes the Association Response frame to the Non-AP MLD Supplicant of the non-AP MLD 101 (S706).

Thereafter, the Non-AP MLD Supplicant stores, in the Association Request frame, the Per-STA Profile subelements of the Links 1 and 2 accepted by the AP MLD 102. The subelements are stored in the Link Info field of the Basic variant Multi-link element of the Association Request frame. An Association Request frame storing the Link Info field of the Basic variant Multi-link element is generated (S707). Specifically, the Non-AP MLD Supplicant regenerates an Association Request frame without a Per-STA Profile subelement relating to a link for which the link establishment is rejected by the AP MLD 102. The STA 1 transmits the Association Request frame generated in S707 to the AP 1 (S708). The AP 1 receives the Association Request frame transmitted in S708 and passes the Association Request frame to the AP MLD Authenticator of the AP MLD 102 (S709).

The AP MLD Authenticator having received this sets the Status codes of the Links 1 and 2 to success in the Per-STA Profile subelements of the Basic variant Multi-link element. An Association Response frame with the Status code of the Association Response set to success is generated (S710). The AP 1 transmits the Association Response frame generated in S710 to the STA 1 (S711). The STA 1 receives the Association Response frame transmitted in S711 and passes the Association Response frame to the Non-AP MLD Supplicant of the non-AP MLD 101 (S712).

Thereafter, the non-AP MLD 101 and the AP MLD 102 perform processing of S713 and subsequent processing and perform a 4-way handshake. In the 4-way handshake processing, a GTK is generated for each of the Links 1 and 2 for which the link establishment is accepted by the AP MLD 102. No GTK is generated for the Link 3 for which the link establishment is not accepted by the AP MLD 102. The AP MLD Authenticator and the Non-AP MLD Supplicant each install the GTKs generated through the 4-way handshake.

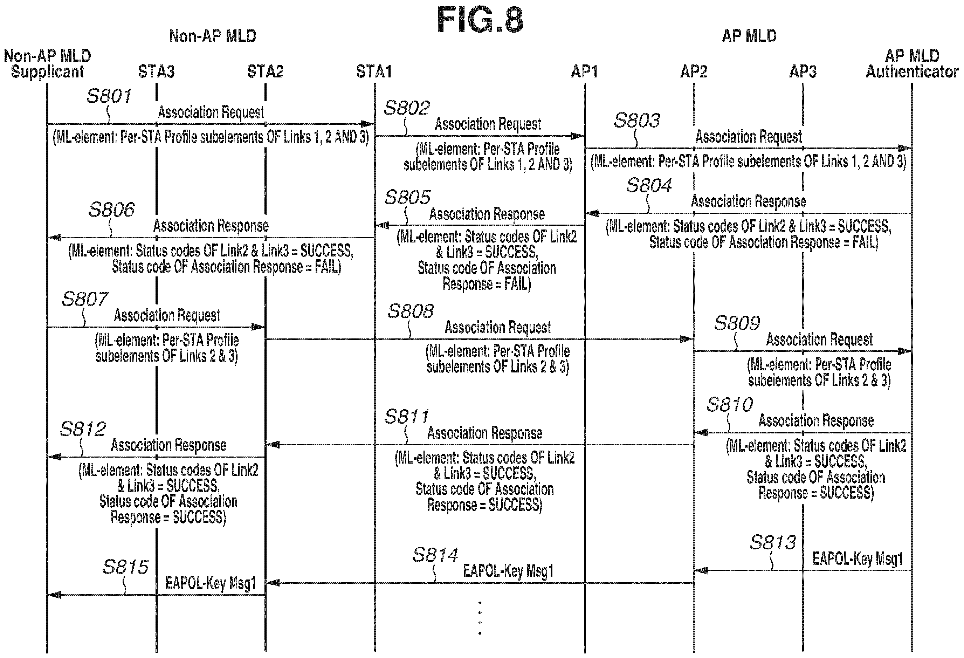

Fig. 8 illustrates a fifth example of a Multi-link communication setup process according to the present exemplary embodiment. In the fifth example, the AP MLD sets a STATUS CODE of an Association Response to FAIL in a case where the AP MLD rejects some of the links for which a setup is requested. Then, in a case where a link used to return the Association Response is not an accepted link, the link is switched to an accepted link, and an Association Request is transmitted via the accepted link. Differences from the above-described first example will be described in detail below.

S801 to S803 are similar to S401 to S403 in Fig. 4. The AP MLD Authenticator sets the Status codes of the Links 2 and 3 to success in the Per-STA Profile subelements of the Basic variant Multi-link element. Furthermore, an Association Response frame with the Status code of the Association Response set to fail is generated (S804). The AP 1 transmits the Association Response frame generated in S804 to the STA 1 (S805). The STA 1 receives the Association Response frame transmitted in S805 and passes the Association Response frame to the Non-AP MLD Supplicant of the non-AP MLD 101 (S806).

Thereafter, the Non-AP MLD Supplicant stores, in the Association Request frame, the Per-STA Profile subelements of the Links 2 and 3 accepted by the AP MLD 102. The Per-STA Profile subelements of the Links 2 and 3 accepted by the AP MLD 102 are stored in the Link Info field of the Basic variant Multi-link element. Furthermore, an Association Request frame storing the above-described information is generated (S807). Specifically, the Non-AP MLD Supplicant regenerates an Association Request frame without a Per-STA Profile subelement relating to a link for which the link establishment is rejected by the AP MLD 102. Thereafter, the STA 2 transmits the Association Request frame generated in S807 to the AP 2 (S808). In the fifth example in Fig. 8, a link for which a multi-link setup is accepted is used as a link for transmitting the regenerated Association Request frame without using a link for which a multi-link setup is rejected. In this example, the Association Request frame is transmitted using the Link 2 without using the Link 1. The AP 2 receives the Association Request frame transmitted in S808 and passes the Association Request frame to the AP MLD Authenticator of the AP MLD 102 (S809).

The AP MLD Authenticator having received this sets the Status codes of the Links 2 and 3 to success in the Per-STA Profile subelements of the Basic variant Multi-link element. Furthermore, an Association Response frame with the Status code of the Association Response set to success is generated (S810). The AP 2 transmits the Association Response frame generated in S810 to the STA2 (S811). The STA 2 receives the Association Response frame transmitted in S811 and passes the Association Response frame to the Non-AP MLD Supplicant of the non-AP MLD 101 (S812).

Thereafter, the non-AP MLD 101 and the AP MLD 102 perform processing of S813 and subsequent processing and perform a 4-way handshake. In the 4-way handshake processing, a GTK is generated for each of the Links 2 and 3 for which the link establishment is accepted by the AP MLD 102. No GTK is generated for the Link 1 for which the link establishment is not accepted by the AP MLD 102. The AP MLD Authenticator and the Non-AP MLD Supplicant each install the GTKs generated through the 4-way handshake.

In any one of the first to fifth examples, a multi-link communication setup is performed using Association Requests/Association Responses as described above.

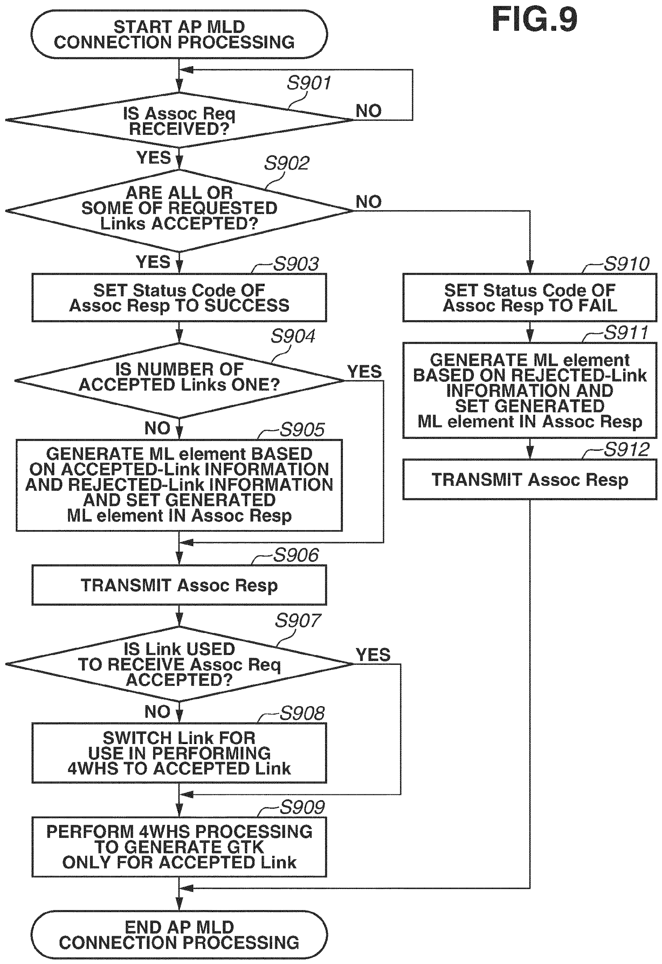

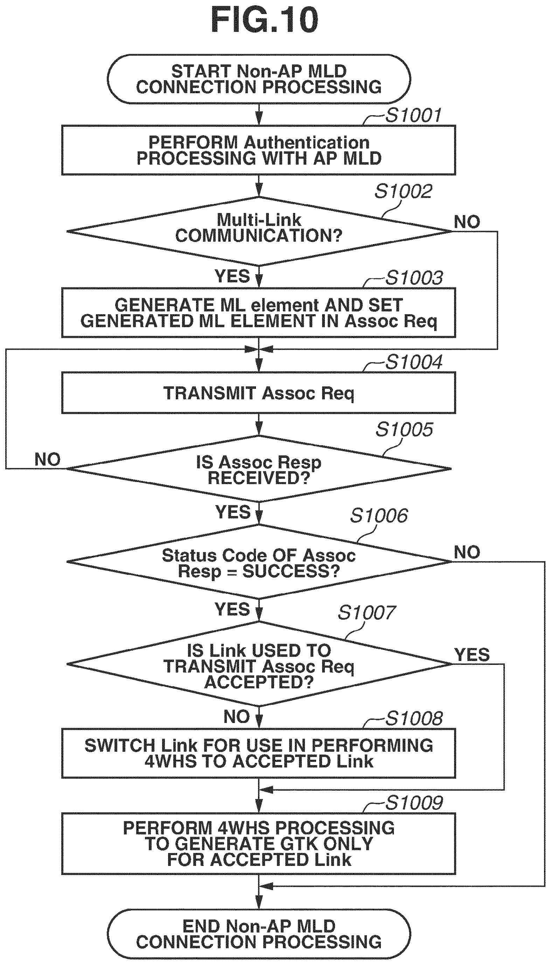

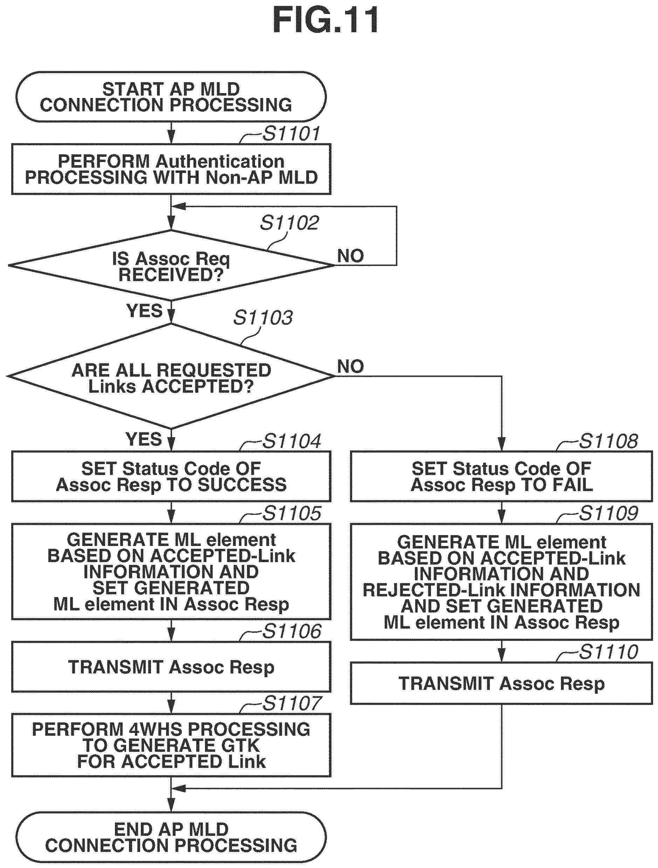

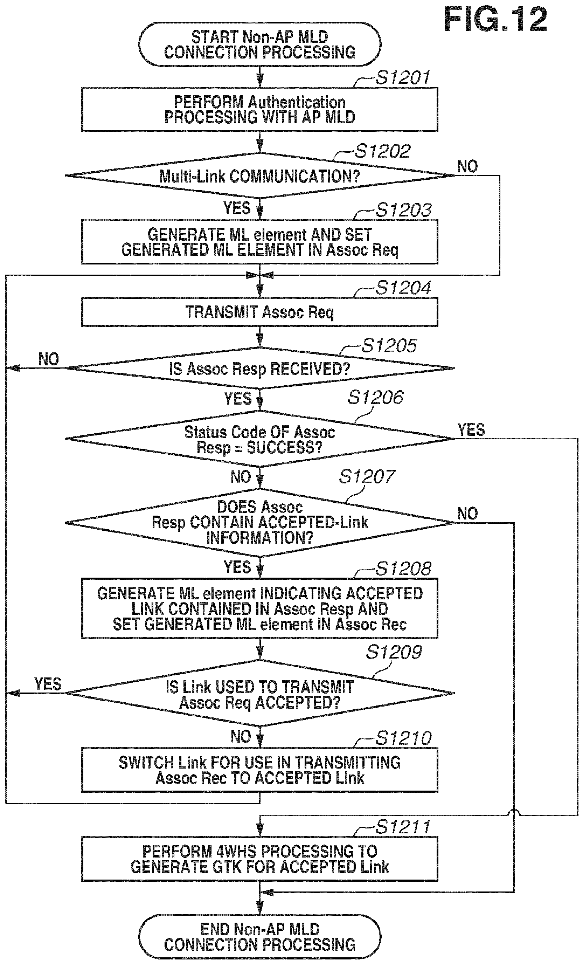

Next, processes each performed by the non-AP MLD 101 and the AP MLD 102 in the first to fifth examples will be described below with reference to flowcharts in Figs. 9 to 12. Fig. 9 is a flowchart illustrating a process of the AP MLD 102 corresponding to the first to third examples. Fig. 10 is a flowchart illustrating a process of the non-AP MLD 101 corresponding to the first to third examples. Fig. 11 is a flowchart illustrating a process of the AP MLD 102 corresponding to the fourth and fifth examples. Fig. 12 is a flowchart illustrating a process of the non-AP MLD 101 corresponding to the fourth and fifth examples. Processing of each step in the flowcharts is realized by a processor of the control unit 202 or a processor of the communication unit 206 included in each of the non-AP MLD 101 and the AP MLD 102 by executing a program stored in the storage unit 201 or the like. Part of the processes in the flowcharts may be executed by using dedicated hardware.

Fig. 9 illustrates a Multi-link setup process executed by the AP MLD 102. First, the AP MLD 102 performs Authentication processing with the non-AP MLD. After the Authentication processing is successfully completed, the AP MLD 102 determines whether an Association Request is received from the non-AP MLD (S901). In a case where it is determined that an Association Request is received, it is determined whether all or some of links for which a multi-link setup is requested by the Association Request can be accepted (S902). In a case where it is determined that all or some of the links can be accepted, processing of S903 is performed, whereas in a case where all the requested links are a link that cannot be accepted, i.e., there is not a single acceptable link, processing of S910 is performed. In S903, the AP MLD 102 generates an Association Response frame with the Status code of the Association Response set to success. The AP MLD 102 then determines whether the number of accepted links is one (S904). In a case where the number of accepted links is one, the AP MLD 102 transmits the Association Response frame generated in S903 to the non-AP MLD (S906). In contrast, in a case where the number of accepted links is not one, the AP MLD 102 generates a Multi-link element based on accepted-link information and rejected-link information and stores the Multi-link element in the Association Response frame (S905). The AP MLD 102 then transmits the Association Response frame generated in S905 to the non-AP MLD (S906).

Thereafter, the AP MLD 102 determines whether the link used to receive the Association Request in S901 is accepted (S907). In a case where the link used to receive the Association Request is not accepted, the AP MLD 102 switches a link for use in performing a 4-way handshake thereafter to any one of the accepted links (S908). The AP MLD 102 then performs a 4-way handshake with the non-AP MLD by using the link switched in S908 and generates a GTK (S909). In a case where the link used in the reception is determined as being accepted in S907, a 4-way handshake is performed using the link used to transmit/receive the Association Request/Association Response, and a GTK is generated (S909).

In a case where all the requested links are links that cannot be accepted in S902, the AP MLD 102 generates an Association Response frame with the Status code set to fail (S910). Then, the AP MLD 102 generates a Multi-link element based on rejected-link information and stores the Multi-link element in the Association Response frame (S911). The AP MLD 102 transmits the Association Response frame generated in S911 to the non-AP MLD (S912).

Fig. 10 illustrates a Multi-link setup process that the non-AP MLD 101 performs. First, the non-AP MLD 101 performs Authentication processing with the AP MLD (S1001). After the Authentication processing is successfully completed, the non-AP MLD 101 determines whether to perform Multi-link communication with the AP MLD (S1002). In a case where Multi-link communication is to be performed, a Multi-link element including information about links for which a Multi-link communication request is to be issued is generated, and the Multi-link element is stored in the Association Request frame (S1003). The non-AP MLD 101 transmits the generated Association Request frame to the AP MLD (S1004).

In a case where it is determined that Multi-link communication is not to be performed in S1002, the non-AP MLD 101 transmits the Association Request frame to the AP MLD without performing S1003.

In a case where an Association Response frame to the Association Request frame transmitted in S1005 is received, whether a status code in the frame is success is determined in S1006. In a case where the determination result in S1006 does not indicate success, it is determined that the Association processing has failed, and the process ends. In a case where the determination result in S1006 indicates success, the non-AP MLD 101 determines whether the link used to transmit the Association Request frame is accepted (S1007). In a case where the determination result in S1007 indicates that the link is not accepted, the non-AP MLD 101 switches the link for use in performing a 4-way handshake with the AP MLD to an accepted link (S1008). Thereafter, the non-AP MLD 101 performs a 4-way handshake with the AP MLD and generates a GTK (S1009). In a case where it is determined that the link used to transmit the Association Request is accepted in S1007, a GTK is generated using the link used to transmit/receive the Association Request/Association Response (S1009). The GTK generation is performed by performing the 4-way handshake.

Fig. 11 illustrates a Multi-link setup process that the AP MLD 102 performs. First, the AP MLD 102 performs Authentication processing with the non-AP MLD (S1101). After the Authentication processing is successfully completed, the AP MLD 102 determines whether an Association Request is received from the non-AP MLD (S1102). In a case where it is determined that an Association Request is received, the AP MLD 102 determines whether all links for which a multi-link setup is requested by the frame can be accepted (S1103). In a case where it is determined that all the requested links can be accepted, processing of S1104 is performed, whereas in a case where at least some of the requested links cannot be accepted, processing of S1108 is performed.

In 51104, the AP MLD 102 generates an Association Response frame with the Status code of the Association Response set to success. The AP MLD 102 generates a Multi-link element based on accepted-link information and stores the Multi-link element in the Association Response frame (S1105). The AP MLD 102 transmits the Association Response frame generated in S1105 to the non-AP MLD (S1106). Thereafter, the AP MLD 102 performs a 4-way handshake with the non-AP MLD and generates a GTK for each accepted link (S1107).

In contrast, in S1108, the AP MLD 102 generates an Association Response frame with the Status code of the Association Response set to fail. The AP MLD 102 then generates a Multi-link element based on accepted-link information and rejected-link information and stores the Multi-link element in the Association Response frame (S1109). The AP MLD 102 transmits the Association Response frame generated in S1109 to the non-AP MLD, and the process ends (S1110).

Fig. 12 illustrates a Multi-link setup process that the non-AP MLD 101 performs. First, the non-AP MLD 101 performs Authentication processing with the AP MLD (S1201).

After the Authentication processing is successfully completed, the non-AP MLD 101 determines whether to perform Multi-link communication with the AP MLD (S1202). In a case where Multi-link communication is to be performed, the non-AP MLD 101 stores, in the Association Request frame, a Multi-link element including information about links for which a Multi-link communication request is to be issued (S1203). The non-AP MLD 101 transmits the generated Association Request frame to the AP MLD (S1204). In a case where it is determined that Multi-link communication is not to be performed in S1002, the non-AP MLD 101 transmits the Association Request frame to the AP MLD without performing S1203.

In S1205, in a case where an Association Response frame corresponding to the transmitted Association Request frame is received, whether a status code in the frame is success is determined (S1206). In a case where the determination result in S1206 does not indicate success, the non-AP MLD 101 determines whether the Association Response contains accepted-link information (S1207). In a case where it is determined that there is an accepted link, a Multi-link element indicating the link information is stored in the Association Request frame in order to use an accepted link as a multi-link communication request link (S1208). The non-AP MLD 101 then determines whether the link used to transmit the Association Response frame is accepted by the AP MLD (S1209). In a case where it is determined that the link is accepted in S1209, the non-AP MLD 101 transmits the Association Request frame generated in S1208 to the AP MLD (S1204). In contrast, in a case where it is determined that the link is not accepted in S1209, processing of switching the link for use in transmitting the Association Request frame generated in S1208 to a link accepted by the AP MLD is performed (S1210). Thereafter, in a case where the determination result in S1206 indicates that the status code of the Association Response in the Association Response frame is success, a GTK is generated with the AP MLD (S1211). The GTK generation is performed by performing a 4-way handshake between the non-AP MLD 101 and the AP MLD 102.

As described above, the non-AP MLD 101 and the AP MLD 102 perform one of the processes in Figs. 9 to 12 to produce the following advantage. Specifically, a multi-link communication setup is performed using Association Requests/Association Responses.

### (Other Exemplary Embodiments)

A recording medium in which program codes of software for realizing the above-described functions are recorded may be supplied to a system or an apparatus, and a computer (CPU, MPU) of the system or the apparatus may read the program codes stored in the recording medium to execute the read program codes. In this case, the program codes read from the storage medium realize the functions of the above-described exemplary embodiments, and the storage medium storing the program codes forms the above-described apparatus.

As a storage medium for supplying the program codes, it is possible to use, for example, a flexible disk, a hard disk, an optical disk, a magneto-optical disk, a CD-ROM, a CD-R, a magnetic tape, a non-volatile memory card, a ROM, or a DVD.

Further, the computer may realize the above-described functions by executing the read program codes, or an OS running on the computer may realize the above-described functions by performing part or all of actual processes based on instructions of the program codes. "OS" is the abbreviation for operating system.

Furthermore, the program codes read from the storage medium may be written to a memory of a function expansion board inserted in the computer or a memory of a function expansion unit connected to the computer. Then, a CPU of the function expansion board or the function expansion unit may perform part or all of actual processes based on the instructions of the program codes and realize the above-described functions.

The present invention can also be realized by a process in which a program for realizing one or more functions of the above-described exemplary embodiments is supplied to a system or an apparatus via a network or a storage medium and one or more processors of a computer of the system or the apparatus read the program and execute the read program. Further, the present invention can also be realized by a circuit (e.g., application-specific integrated circuit (ASIC)) configured to realize one or more functions.

The present invention is not limited to the above-described exemplary embodiments, and various changes and modifications can be made without departing from the spirit and scope of the present invention. The following claims are attached to disclose the scope of the present invention.

The present application claims priority to Japanese Patent Application No. 2021-147003 filed September 9, 2021, which is incorporated by reference herein in its entirety.

## Claims

1. A communication apparatus configured to perform wireless communication compliant with Institute of Electrical and Electronics Engineers (IEEE) 802.11 series standards via a plurality of wireless communication links using a different frequency from each other, the communication apparatus comprising:
a reception unit configured to receive an Association Request frame including information indicating a plurality of links for which wireless communication link establishment is requested by another communication apparatus; and
a transmission unit configured to set, in a case where the wireless communication link establishment is accepted for some of the plurality of links indicated by the information while the wireless communication link establishment is rejected for some of the plurality of links indicated by the information, information of a Status code that is included in an Association Response frame and is a common Status code for the plurality of links to information indicating success, and transmit the Association Response frame to the other communication apparatus.

2. The communication apparatus according to Claim 1, wherein in a case where the wireless communication link establishment is accepted for one link among the plurality of links indicated by the information and the link is a link used to receive the Association Request frame, the transmission unit transmits the Association Response frame without a Multi-link element to the other communication apparatus.

3. A communication apparatus configured to perform wireless communication compliant with IEEE 802.11 series standards via a plurality of wireless communication links using a different frequency from each other, the communication apparatus comprising:
a reception unit configured to receive an Association Request frame including information indicating a plurality of links for which wireless communication link establishment is requested by another communication apparatus; and
a transmission unit configured to set, in a case where the wireless communication link establishment is accepted for some of the plurality of links indicated by the information while the wireless communication link establishment is rejected for some of the plurality of links indicated by the information, information of a Status code that is included in an Association Response frame and is a common Status code for the plurality of links to information indicating fail, and transmit the Association Response frame to the other communication apparatus.

4. The communication apparatus according to any one of Claims 1 to 3, further comprising a processing unit configured to perform a 4-way handshake with the other communication apparatus and generate a group temporal key (GTK).

5. The communication apparatus according to Claim 4, wherein, in a case where the link used to receive the Association Request frame is a link for which the wireless communication link establishment is rejected, the processing unit performs the 4-way handshake by using a link different from the link used to receive the Association Request frame.

6. A communication apparatus configured to perform wireless communication compliant with IEEE 802.11 series standards via a plurality of wireless communication links using a different frequency from each other, the communication apparatus comprising:
a first transmission unit configured to transmit an Association Request frame including information indicating a plurality of links for which wireless communication link establishment is requested;
a reception unit configured to receive, as a response to the Association Request frame, an Association Response frame in which information of a Status code that is included in the Association Response frame and is a common Status code for the plurality of links is set to information indicating fail;
a generation unit configured to generate, based on the reception of the Association Request frame by the reception unit, an Association Request frame that designates, as a link for which the wireless communication link establishment is requested, a link for which the wireless communication link establishment is accepted in the Association Request frame; and
a second transmission unit configured to transmit the Association Request frame generated by the generation unit.

7. The communication apparatus according to Claim 6, wherein in a case where the accepted link is a link different from a link used by the first transmission unit, the second transmission unit transmits the Association Request frame by using the accepted link.

8. A communication method of performing wireless communication compliant with IEEE 802.11 series standards via a plurality of wireless communication links using a different frequency from each other, the communication method comprising:
receiving an Association Request frame including information indicating a plurality of links for which wireless communication link establishment is requested; and
transmitting the Association Response frame by setting, in a case where the wireless communication link establishment is accepted for some of the plurality of links indicated by the information while the wireless communication link establishment is rejected for some of the plurality of links indicated by the information, information of a Status code that is included in an Association Response frame and is a common Status code for the plurality of links to information indicating success.

9. A communication method of performing wireless communication compliant with IEEE 802.11 series standards via a plurality of wireless communication links using a different frequency from each other, the communication method comprising:
receiving an Association Request frame including information indicating a plurality of links for which wireless communication link establishment is requested; and
transmitting the Association Response frame by setting, in a case where the wireless communication link establishment is accepted for some of the plurality of links indicated by the information while the wireless communication link establishment is rejected for some of the plurality of links indicated by the information, information of a Status code that is included in an Association Response frame and is a common Status code for the plurality of links to information indicating fail.

10. A communication method of performing wireless communication compliant with IEEE 802.11 series standards via a plurality of wireless communication links using a different frequency from each other, the communication method comprising:
performing a first transmission to transmit an Association Request frame including information indicating a plurality of links for which wireless communication link establishment is requested;
receiving, as a response to the Association Request frame, an Association Response frame in which information of a Status code that is included in the Association Response frame and is a common Status code for the plurality of links is set to information indicating fail;
generating, based on the reception of the Association Request frame, an Association Request frame that designates, as a link for which the wireless communication link establishment is requested, a link for which the wireless communication link establishment is accepted in the Association Request frame; and
performing a second transmission to transmit the generated Association Request frame.

11. A program for causing a computer to operate as the communication apparatus according to any one of Claims 1 to 7.
